# EUROPÄISCHE PATENTSCHRIFT

(11) **EP 3 038 786 B1**
(45) Veröffentlichungstag und Bekanntmachung des Hinweises auf die Patenterteilung: **21.11.2018**
(21) Anmeldenummer: 14741526.9
(22) Anmeldetag: 16.07.2014
(51) Int. Cl.: B23K 26/04, B23K 26/08, B25J 9/16

(54) **VERFAHREN ZUM FESTSTELLEN VON ABWEICHUNGEN EINER IST-LAGE EINES LASERBEARBEITUNGSKOPFES VON SEINER SOLL-LAGE SOWIE LASERBEARBEITUNGSMASCHINE ZUR DURCHFÜHRUNG DES VERFAHRENS**
METHOD OF DETERMINING DEVIATIONS OF THE ACTUAL POSITION OF A LASER MACHINING HEAD FROM THE TARGET POSITION THEREOF AND LASER MACHINING DEVICE FOR CARRYING OUT THE METHOD
PROCÉDÉ DE DÉTERMINATION D'ÉCARTS DE LA POSITION RÉELLE D'UNE TÊTE D'USINAGE AU LASER PAR RAPPORT À SA POSITION THÉORIQUE ET MACHINE DE TRAITEMENT LASER POUR LA MISE EN OEUVRE DU PROCÉDÉ

(30) Priorität: 28.08.2013 DE 102013217126
(43) Veröffentlichungstag der Anmeldung: 06.07.2016
(73) Patentinhaber: TRUMPF Laser-und Systemtechnik GmbH, 71254 Ditzingen (DE)
(72) Erfinder: HAGENLOCHER, Tobias, 71254 Ditzingen (DE); WADEHN, Wolf, Farmington, CT06032 (US)
(74) Vertreter: Kohler Schmid Möbus Patentanwälte
(86) Internationale Anmeldenummer: PCT/EP2014/001944
(87) Internationale Veröffentlichungsnummer: WO 2015/028110

(56) Entgegenhaltungen:
- WO-A1-2012/130666
- DE-A1- 19 963 010
- DE-A1-102007 013 623
- US-A- 5 400 638

## Beschreibung

Die Erfindung betrifft ein Verfahren zum Feststellen, ob eine Ist-Lage eines entlang mehrerer Bewegungsachsen beweglich gelagerten Laserbearbeitungskopfes einer Laserbearbeitungsmaschine einer Soll-Lage des Laserbearbeitungskopfes entspricht oder davon abweicht, sowie ein Computerprogrammprodukt und eine Laserbearbeitungsmaschine zur Durchführung eines solchen Verfahrens.

Ein derartiges Verfahren ist beispielsweise aus der US 5,400,638 bekannt, welches die Basis für den Oberbegriff der Ansprüche 1 und 15 bildet. Darin ist ein Kalibrationssystem beschrieben, bei dem ein Roboter mittels einer Kamera und eines Abstandssensors ein Referenzbauteil an verschiedenen Messstellen anfährt und vermisst, wobei das Referenzbauteil an einem Grundkörper des Roboters angeordnet ist. Auf diese Weise ist es möglich, temperaturabhängige Änderungen der Roboterarmlänge festzustellen und anschließend zu kompensieren. Bei dem Roboter, aber auch bei anderen bekannten Bearbeitungsmaschinen, wie z.B. Laserbearbeitungsmaschinen, stellt das Referenzbauteil jedoch eine Störkontur im jeweiligen Bearbeitungsraum dar, die zu Kollisionen führen kann. Ferner ist die Justage des Referenzbauteils in der korrekten Lage zum Zwecke der vorbeschriebenen Vermessung zeitlich und technisch aufwändig. Des Weiteren ist problematisch, dass eine kollisionsbedingte, jedoch vergleichsweise kleine Abweichung mit dem menschlichen Auge nicht immer erkannt werden kann. Derartige Fehlstellungen führen jedoch in der Folge zu fehlerhaft hergestellten Werkstücken, d.h. zu kostenintensivem Ausschuss.

Aus der WO 2012/130666 A1 ist es bekannt, zur Vermessung eines verfahrbaren Laserstrahls Lochblenden zu benutzen, hinter denen Detektoren angeordnet sind. Weiterhin ist es aus der DE 199 63 010 A1 bekannt, eine Soll-Ist-Abweichung der Position einer in einem Werkstück befindlichen Struktur gegenüber dem Laserbearbeitungskopf durch reflektiertes Licht zu bestimmen.

Schließlich ist aus der DE 10 2007 013623 A1 die Justage eines Laserstrahls gegenüber einer Durchtrittsöffnung in einer Laserdüse durch Nutzung der reflektierten Strahlung bekannt.

Der vorliegenden Erfindung liegt daher die Aufgabe zugrunde, ein eingangs genanntes Verfahren sowie ein Computerprogrammprodukt und eine Laserbearbeitungsmaschine zur Durchführung dieses Verfahren anzugeben, die die Nachteile des Standes der Technik überwinden. Insbesondere soll durch das erfindungsgemäße Verfahren und die erfindungsgemäße Laserbearbeitungsmaschine auf zeit- und kostenintensive und technisch aufwändige Mittel verzichtet werden.

Diese Aufgabe wird durch ein Verfahren der eingangs genannten Art gelöst, das folgende Verfahrensschritte umfasst:
a) Auswählen von mindestens zwei unterschiedlichen Bearbeitungslagen des Laserbearbeitungskopfes, in denen der vom Laserbearbeitungskopf ausgesandte Laserstrahl auf die gleiche Soll-Position eines an der Laserbearbeitungsmaschine festgelegten Werkstücks gerichtet ist;
b) Bewegen des Laserbearbeitungskopfes in die eine ausgewählte, erste Bearbeitungslage und Einbringen einer Durchtrittsöffnung an der Soll-Position oder um die Soll-Position des Werkstücks herum mittels des Laserstrahls in das Werkstück; und
c) Bewegen des Laserbearbeitungskopfes in die andere ausgewählte, zweite Bearbeitungslage und Detektieren von Strahlung, die durch eine Wechselwirkung zwischen dem Laserstrahl und dem Werkstück erzeugt wird, wobei die Ist-Lage des LaserbearbeitungsKopres von seiner soll-Lage um weniger als einen von der Abmessung der Durchtrittsöffnung und von den beiden Bearbeitungslagen des Laserbearbeitungskopfes abhängigen Betrag abweicht, wenn keine Strahlung detektiert wird, oder um mehr als diesen Betrag abweicht, wenn Strahlung detektiert wird.

Erfindungsgemäß kann auf einfache, sehr schnelle und effektive Weise in jeder Phase der Werkstückbearbeitung oder in jeder Phase des Einrichtens der Laserbearbeitungsmaschine die Ist-Lage des Laserbearbeitungskopfes mit seiner Soll-Lage verglichen werden. Es kann also überprüft werden, ob eine unerwünschte geometrische Abweichung vorliegt, und somit eine Feststellung getroffen werden, ob das Einrichten der Maschine (bisher) fehlerfrei erfolgt ist, ob die Werkstückbearbeitung fortgesetzt werden kann oder ob eine Gegenmaßnahme eingeleitet werden sollte. Durch das erfindungsgemäße Verfahren kann insbesondere eine zuvor durchgeführte und in der Regel aufwändige geometrische Kalibrierung des Laserbearbeitungskopfes auf einfache, schnelle und effektive Weise überprüft werden. Insbesondere erlaubt dies eine Überprüfung, ob die in einer NC-Steuerung der Laserbearbeitungsmaschine hinterlegten numerischen Versatzwerte der kinematischen Kette zur Positionierung des Laserbearbeitungskopfs im Raum den tatsächlichen mechanischen Versatzmaßen entsprechen. Es kann darauf verzichtet werden, zunächst ein erstes Werkstück zu bearbeiten und anschließend dessen Produktionsgenauigkeit zur mittelbaren Kontrolle der Kalibrierung heranzuziehen. Das erfindungsgemäße Verfahren erlaubt die Überprüfung der Kalibrierung des Laserbearbeitungskopfes bzw. der beweglich gekoppelten und den Laserbearbeitungskopf bei der Werkstückbearbeitung manipulierenden Komponenten der kinematischen Kette.

In der ersten Bearbeitungslage des Laserbearbeitungskopfes wird die Durchtrittsöffnung entweder an der Soll-Position des Werkstücks als punktuelles Einstichloch in das Werkstück eingestochen oder um die Soll-Position des Werkstücks herum aus dem Werkstück herausgeschnitten. Im Unterschied zum ersteren Fall, bei dem der Durchmesser der Durchtrittsöffnung dem Laserstrahldurchmesser entspricht, sind im letzteren Fall die Abmessungen der Durchtrittsöffnung größer als der Laserstrahldurchmesser. Bevorzugt wird die Durchtrittsöffnung in einem Werkstückabschnitt eingebracht, der bei einer Werkstückweiterverarbeitung als Ausschuss abgetrennt wird.

In der zweiten Bearbeitungslage des Laserbearbeitungskopfes wird die Prozessstrahlung detektiert, die durch Wechselwirkung zwischen dem Laserstrahl und dem Werkstück erzeugt wird. Wenn der Laserstrahl durch die Durchtrittsöffnung hindurchgeht und somit keine Prozessstrahlung erzeugt wird, weicht die Ist-Lage des Laserstrahls auf dem Werkstück von seiner Soll-Lage um höchstens die Abmessung der Durchtrittsöffnung ab, und folglich weicht die Ist-Lage des Laserbearbeitungskopfes von seiner Soll-Lage um höchstens einen von der Abmessung der Durchtrittsöffnung und von den beiden Bearbeitungslagen des Laserbearbeitungskopfes abhängigen Betrag ab. Im Fall des punktuellen Einstichlochs stimmt die Ist-Lage des Laserbearbeitungskopfes exakt mit seiner Soll-Lage überein. Wenn der Laserstrahl hingegen nicht auf durch die Durchtrittsöffnung, sondern auf Werkstückmaterial trifft und somit Prozessstrahlung erzeugt wird, weicht die Ist-Lage des Laserstrahls auf dem Werkstück von seiner Soll-Lage um mindestens die Abmessung der Durchtrittsöffnung ab, und folglich weicht die Ist-Lage des Laserbearbeitungskopfes von seiner Soll-Lage um mindestens den von der Abmessung der Durchtrittsöffnung und von den beiden Bearbeitungslagen des Laserbearbeitungskopfes abhängigen Betrag ab.

Das erfindungsgemäße Verfahren wird vorteilhaft in einem vorbestimmten Rhythmus durchgeführt, also beispielsweise nach jedem fünften, zehnten oder zwanzigsten Werkstück einer Werkstückserie von nacheinander bearbeiteten Werkstücken.

In der zweiten Bearbeitungslage muss sich zumindest eine Achsstellung der den Laserkopf bewegenden Bewegungsachsen der Laserbearbeitungsmaschine von der jeweiligen Achsstellung in der ersten Bearbeitungslage unterscheiden. Besonders bevorzugt wird der Laserbearbeitungskopf in Schritt c) entlang mindestens einer beim Einbringen der Durchtrittsöffnung nicht genutzten Bewegungsachse bewegt, also um mindestens eine nicht genutzte Bewegungsachse verschwenkt und/oder entlang mindestens einer nicht genutzten Bewegungsachse verfahren. Beispielsweise kann die Durchtrittsöffnung durch Verfahren des Laserbearbeitungskopfes in X- und Y-Richtung aus dem Werkstück ausgeschnitten und anschließend der Laserbearbeitungskopf in Schritt c) durch eine Drehung um 180° um die Strahlrichtung (C-Achse) von der ersten in die zweite Bearbeitungslage bewegt werden. Alternativ kann der Laserstrahl in der zweiten Bearbeitungslage beispielsweise auch aus der gleichen Richtung und unter dem gleichen Winkel wie in der ersten Bearbeitungslage auf die Soll-Position treffen, wenn der Laserbearbeitungskopf in der zweiten Bearbeitungslage gegenüber der ersten Bearbeitungslage in Strahlrichtung (Z-Achse) verschoben und/oder um die Laserstrahlachse verdreht ist.

Bevorzugt trifft in Schritt b) der vom Laserbearbeitungskopf zum Einbringen der Durchtrittsöffnung ausgesandte Laserstrahl im Wesentlichen rechtwinklig auf die Werkstückoberfläche auf. Vorteilhaft trifft der Laserstrahl senkrecht auf die horizontal ausgerichtete Werkstückoberfläche, damit das ausgeschnittene Werkstückmaterial, beispielsweise ein kreisförmiger Butzen, nach unten aus der Durchtrittsöffnung herausfallen kann.

Vorzugsweise wird ferner für den Fall, dass eine abweichende Ist-Lage festgestellt wird, eine geometrische Kalibrierung des Laserbearbeitungskopfs durchgeführt. Somit wird vermieden, dass beispielsweise durch eine vorausgegangene Fehlkalibrierung oder Kollision ungenau bearbeitete Werkstücke erzeugt werden. Die Kalibrierung erfolgt bevorzugt automatisch. Alternativ kann auch ein Alarm das Bedienpersonal auf die Abweichung der Ist- von der Soll-Lage hinweisen oder eine bereits begonnene Werkstückbearbeitung kann angehalten werden.

In einer bevorzugten Kalibrierungsvariante wird für den Fall, dass in Schritt c) Strahlung detektiert wird, der Laserbearbeitungskopf mit kontinuierlich oder gepulst einstrahlendem Laserstrahl aus der zweiten Bearbeitungslage solange relativ zum Werkstück bewegt, bis in einer dritten Bearbeitungslage des Laserbearbeitungskopfs keine Strahlung mehr detektiert wird, weil der Laserstrahl durch die Durchtrittsöffnung hindurchtritt. Aus dem Versatz zwischen der zweiten und der dritten Bearbeitungslage kann eine Abweichung der Ist-Lage des Laserbearbeitungskopfes von seiner Soll-Lage zumindest näherungsweise ermittelt werden. Zusätzlich ist es auch möglich, dass der Laserbearbeitungskopf mit kontinuierlich oder gepulst einstrahlendem Laserstrahl aus seiner dritten Bearbeitungslage relativ zum Werkstück bewegt wird und dabei mittels der Übergänge zwischen detektierter und nicht-detektierter Strahlung die Ist-Positionen von Randpunkten der Durchtrittsöffnung erfasst werden, dass mittels der Ist-Positionen der Randpunkte die Ist-Position und/oder die Ist-Kontur der Durchtrittsöffnung bestimmt wird und dass aus dem Versatz zwischen der Ist- und der Soll-Position der Durchtrittsöffnung und/oder aus der Abweichung zwischen der Ist- und der Soll-Kontur der Durchtrittsöffnung zumindest näherungsweise eine Abweichung der Ist-Lage des Laserbearbeitungskopfes von seiner Soll-Lage ermittelt wird.

Eine andere bevorzugte Kalibrierungsvariante sieht vor, dass für den Fall, dass in Schritt c) keine Strahlung detektiert wird, der Laserbearbeitungskopf mit kontinuierlich oder gepulst einstrahlendem Laserstrahl relativ zum Werkstück bewegt wird und dabei mittels der Übergänge von detektierter und nicht-detektierter Strahlung die Ist-Positionen von Randpunkten der Durchtrittsöffnung erfasst werden, dass mittels der Ist-Positionen der Randpunkte die Ist-Position und/oder die Ist-Kontur der Durchtrittsöffnung bestimmt wird und dass aus dem Versatz zwischen der Ist- und der Soll-Position der Durchtrittsöffnung und/oder aus der Abweichung zwischen der Ist- und der Soll-Kontur der Durchtrittsöffnung zumindest näherungsweise eine Abweichung der Ist-Lage des Laserbearbeitungskopfes von seiner Soll-Lage ermittelt wird.

In beiden Kalibrierungsvarianten ist es zum Auffinden oder zur schnellen Randerkennung der Durchtrittsöffnung vorteilhaft, wenn der Laserstrahl entlang eines vorbestimmten Bewegungsmusters, insbesondere eines mäanderförmigen Bewegungsmusters, relativ zum Werkstück bewegt wird. Für den Fall, dass der Laserstrahl mit voller Schneidleistung gepulst eingestrahlt wird, sollten sich die Soll-Positionen der einzelnen, eingestrahlten Laserpulse des gepulst einstrahlenden Laserstrahls auf dem Werkstück räumlich nicht überlappen, da anderenfalls, also bei räumlichem Überlapp benachbarter Laserpulse auf dem Werkstück, der Werkstückrand mit jedem Laserpuls weiter abgetragen wird, ohne dass genug Licht zur Detektion der Wechselwirkung erzeugt wird. Dabei wird der Laserstrahl vorteilhaft bevorzugt relativ zum Werkstück derart bewegt, dass sich die Soll-Positionen der Laserpulse der Soll-Kontur der Durchtrittsöffnung nicht rechtwinklig nähern, sondem unter einem möglichst flachen Winkel. Durch diese Maßnahme kann sichergestellt werden, dass jeder Laserpuls auf ein nicht vom vorherigen Laserpuls bereits bearbeitetes Werkstückmaterial trifft.

Die Aufgabe wird ferner gelöst durch eine Laserbearbeitungsmaschine zur Durchführung des erfindungsgemäßen Verfahrens, umfassend einen beweglich gelagerten Laserbearbeitungskopf zur Bearbeitung von Werkstücken mittels eines Laserstrahls, eine Steuereinrichtung, die programmiert ist, den Laserbearbeitungskopf in die erste Bearbeitungslage zu bewegen und die Durchtrittsöffnung an der Soll-Position oder um die Soll-Position des Werkstücks herum mittels des Laserstrahls in das Werkstück einzubringen und anschließend den Laserbearbeitungskopf in die zweite Bearbeitungslage zu bewegen; einen Sensor zum Detektieren von durch eine Wechselwirkung zwischen dem Laserstrahl und dem Werkstück erzeugter Strahlung und eine Auswerteeinrichtung, die programmiert ist, anhand der detektierten Strahlung zu prüfen, ob eine Ist-Lage des Laserbearbeitungskopfs seiner Soll-Lage entspricht oder davon abweicht.

Die Erfindung betrifft schließlich auch ein Computerprogrammprodukt, welches Codemittel aufweist, die zum Durchführen aller Schritte des erfindungsgemäßen Verfahrens angepasst sind, wenn das Programm auf einer Steuereinrichtung einer Laserbearbeitungsmaschine abläuft.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Figuren der Zeichnung zeigen den erfindungsgemäßen Gegenstand stark schematisiert und sind nicht maßstäblich zu verstehen. Es zeigen:
- Fig. 1: einen Laserbearbeitungskopf einer erfindungsgemäßen Laserbearbeitungsmaschine in einer ersten Bearbeitungslage;
- Fig. 2a: den Laserbearbeitungskopf der Fig. 1 in einer zweiten Bearbeitungslage, die einer Soll-Lage entspricht;
- Fig. 2b: den Laserbearbeitungskopf der Fig. 1 in einer zweiten Bearbeitungslage, die von der Soll-Lage gemäß Fig. 2a abweicht;
- Fig. 3: eine Draufsicht auf das mittels des Laserbearbeitungskopfes bearbeitete Werkstück, wobei der Laserstrahl zum Auffinden einer Durchtrittsöffnung über das Werkstück bewegt wird; und
- Fig. 4: eine Draufsicht auf das mittels des Laserbearbeitungskopfes bearbeitete Werkstück, wobei der Laserstrahl zur Randerkennung der Durchtrittsöffnung über das Werkstück bewegt wird.

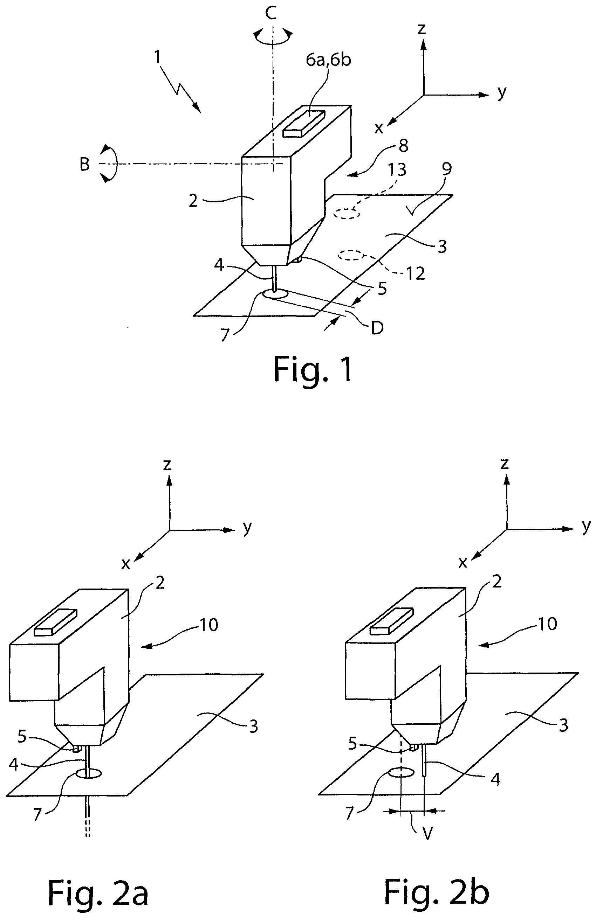

**Fig. 1** zeigt eine Laserbearbeitungsmaschine **1** mit einem beweglich gelagerten Laserbearbeitungskopf **2** zur Bearbeitung eines Werkstücks (z.B. Blech) **3** mittels eines Laserstrahls **4.** Die Laserbearbeitungsmaschine 1 weist einen Sensor **5** zum Detektieren von durch eine Wechselwirkung zwischen dem Laserstrahl 4 und dem Werkstück 3 erzeugter Strahlung, sowie eine Steuereinrichtung **6a** und eine Auswerteeinrichtung **6b** auf. Der Laserbearbeitungskopf 2 ist gegenüber einem nicht dargestellten in der Regel ortsfesten Maschinengrundkörper der Laserbearbeitungsmaschine 1 um mehrere Achsen **X, Y, Z** translatorisch verfahrbar drehbar und/oder um die Achsen **B, C** drehbar gelagert. Das Werkstück 3 ist in der Regel an dem Maschinengrundkörper festgelegt, d.h. eingespannt.

Bei der Bearbeitung des Werkstücks 3 mittels des Laserbearbeitungskopfes 2 können aufgrund von Fehlstellungen des Laserbearbeitungskopfes 2, d.h. in Fällen, in denen eine Ist-Lage des Laserbearbeitungskopfes 2 von seiner Soll-Lage abweicht, Werkstücke 3 fehlerhaft bearbeitet werden. Die Ursachen für solche Fehlstellungen oder Abweichungen können beispielsweise fehlerhafte vorausgegangene geometrische Kalibrierungen des Laserbearbeitungskopfes 2 gegenüber dem Maschinengrundkörper oder vorausgegangene unerwünschte Kollisionen des Laserbearbeitungskopfes 2 mit dem Werkstück 3 oder anderen Teilen des Maschinengrundkörpers sein. Um Abweichungen zu vermeiden, wird im Folgenden mit Bezug zur Fig. 1 sowie den **Fign. 2a** und **2b** ein Verfahren zum Feststellen von Abweichungen der Ist-Lage des Laserbearbeitungskopfes 2 von der Soll-Lage des Laserbearbeitungskopfes 2 beschrieben. Durch das Verfahren wird geprüft, ob, wie beispielhaft in Fig. 2a gezeigt, die Ist-Lage der Soll-Lage entspricht oder ob, wie in Fig. 2b beispielhaft anhand eines Versatzes **V** dargestellt, die Ist-Lage von der Soll-Lage abweicht.

In einem ersten Verfahrensschritt werden von der Steuereinrichtung 6a zwei unterschiedliche Bearbeitungslagen **8, 10** des Laserbearbeitungskopfes 2 mit den Koordinaten (x₁ y₁, z₁, b₁, c₁) und (x₂, y₂, z₂, b₂, c₂) ausgewählt, in denen der vom Laserbearbeitungskopf 2 ausgesandte Laserstrahl 4 auf die gleiche Soll-Position auf dem Werkstück 3 gerichtet ist. Die beiden Bearbeitungslagen 8, 10 unterscheiden sich in mindestens einer ihrer Koordinaten.
In einem zweiten Verfahrensschritt wird der Laserbearbeitungskopf 2 in die eine ausgewählte, erste Bearbeitungslage 8 bewegt und eine Durchtrittsöffnung **7** an der Soll-Position oder um die Soll-Position des Werkstücks 3 herum mittels des Laserstrahls 4 in das Werkstück 3 eingebracht. Die Durchtrittsöffnung 7 wird entweder an der Soll-Position des Werkstücks als punktuelles Einstichloch in das Werkstück eingestochen oder um die Soll-Position des Werkstücks 3 herum aus dem Werkstück herausgeschnitten. Im Unterschied zum ersteren Fall, bei dem der Durchmesser **D** der Durchtrittsöffnung 7 dem Laserstrahldurchmesser entspricht, sind im letzteren Fall die Abmessungen D der Durchtrittsöffnung 7 größer als der Laserstrahldurchmesser. In den Figuren ist die Durchtrittsöffnung 7 zur Illustration übertrieben groß dargestellt. Bevorzugt trifft dabei der Laserstrahl 4 senkrecht auf die horizontal ausgerichtete Werkstückoberseite **9** des Werkstücks 3.

In einem dritten Verfahrensschritt wird der Laserbearbeitungskopf 2 bei ausgeschaltetem Laserstrahl 4 in die andere ausgewählte, zweite Bearbeitungslage 10 bewegt, die in den Fign. 2a oder 2b dargestellt ist. Im Vergleich zur Fig. 1 wurde der Laserbearbeitungskopf 2 in den Fign. 2a und 2b durch eine Drehung um 180° um die C- bzw. Z-Achse und eine Verschiebung in der X-Richtung von der ersten Bearbeitungslage 8 in die zweite Bearbeitungslage 10 bewegt. Der Laserbearbeitungskopf 2 kann auch alternativ um andere bzw. alle verfügbaren Achsen X, Y, Z, B, C in die zweite Bearbeitungslage 10 bewegt werden. Der Laserstrahl 4 wird eingeschaltet, und die Strahlung, die durch eine Wechselwirkung zwischen dem Laserstrahl 4 und dem Werkstück 3 erzeugt wird, wird von dem Sensor 5 detektiert. Wenn der Laserstrahl 4 durch die Durchtrittsöffnung 7 hindurchgeht und somit keine Prozessstrahlung erzeugt wird, weicht die Ist-Lage des Laserstrahls 4 auf dem Werkstück 3 von seiner Soll-Lage um höchstens die Abmessung D der Durchtrittsöffnung 7 ab, und folglich weicht die Ist-Lage des Laserbearbeitungskopfes von seiner Soll-Lage um höchstens einen von der Abmessung D und von den beiden Bearbeitungslagen 8, 10 des Laserbearbeitungskopfes 2 abhängigen Betrag ab. Im Fall des punktuellen Einstichlochs stimmt die Ist-Lage des Laserbearbeitungskopfes 2 exakt mit seiner Soll-Lage überein. Wenn der Laserstrahl 4 hingegen nicht auf durch die Durchtrittsöffnung 7, sondern auf Werkstückmaterial trifft und somit Prozessstrahlung erzeugt wird, die vom Sensor 5 detektiert wird, weicht die Ist-Lage des Laserstrahls 4 auf dem Werkstück 3 von seiner Soll-Lage um mindestens die Abmessung D der Durchtrittsöffnung 7 ab, und folglich weicht die Ist-Lage des Laserbearbeitungskopfes 2 von seiner Soll-Lage um mindestens den von der Abmessung der Durchtrittsöffnung D und von den beiden Bearbeitungslagen des Laserbearbeitungskopfes 2 abhängigen Betrag ab.

Die durch den Sensor 5 detektierte Strahlung kann beispielsweise bei der Wechselwirkung erzeugtes Prozesslicht und/oder Wärmestrahlung sein. Bei der Wechselwirkung des Laserstrahls 4 mit dem Werkstück 3 entsteht ein Prozessleuchten mit Wellenlängen, die typischerweise im UV- oder VIS-Bereich liegen. Dieses Prozessleuchten und/oder Wärmestrahlung (im NIR- bzw. IR-Bereich), welche beim Aufheizen des Werkstücks 3 durch den Laserstrahl 4 erzeugt wird, kann mittels des Sensors 5 detektiert werden. Die durch den Sensor 5 detektierte Strahlung kann auch vom Werkstück 3 zurückreflektierte Laserstrahlung sein. In diesem Fall besteht das Werkstück 3 aus einem Material, welches die Laserstrahlung zumindest teilweise reflektiert, was typischerweise bei metallischen Werkstücken, insbesondere bei Blechen, der Fall ist. Um keine zu starken Veränderungen der Werkstückoberfläche 9 durch das Einstrahlen des Laserstrahls 4 hervorzurufen, wenn eine Abweichung V zwischen der Ist-Lage und der Soll-Lage besteht und der Laserstrahl 4 mithin beim Einstrahlen auf die Soll-Position der Durchtrittsöffnung 7 mit dem Werkstückmaterial wechselwirkt, kann die Intensität des Laserstrahls 4 beim Einstrahlen aus der zweiten Bearbeitungslage 10 im Vergleich zur Intensität des Laserstrahls 4 beim Einbringen der Durchtrittsöffnung 7 verringert werden. Neben dem zur Bearbeitung (zum Schneiden) genutzten Laserstrahl 4 kann alternativ auch ein anderer Laser, insbesondere ein Laser mit einer anderen Wellenlänge, zum Einstrahlen an die Soll-Position der Durchtrittsöffnung 7 eingesetzt werden. Die Auswerteeinrichtung 6b der Laserbearbeitungsmaschine 1 ist dazu programmiert, anhand der detektierten Strahlung zu prüfen, ob die Ist-Lage des Laserbearbeitungskopfs 2 seiner Soll-Lage entspricht oder davon abweicht.

Die vorbeschriebenen Verfahrensschritte können wiederholt an mehreren voneinander beabstandeten Positionen **12, 13** eines zu bearbeitenden Werkstücks 3 durchgeführt werden (vgl. Fig. 1). Somit können positionsabhängige Abweichungen der Ist- von der Soll-Lage des Laserbearbeitungskopfes 2 registriert werden. Bei solchen positionsabhängigen Abweichungen sind die den Laserbearbeitungskopf 2 manipulierenden Glieder derart zueinander versetzt bzw. ist die kinematische Kette derart verstimmt, dass die Abweichungen an unterschiedlichen Positionen 12, 13 des Bearbeitungsraumes der Laserbearbeitungsmaschine 1 unterschiedlich groß sind. Dementsprechend machen sich solche positionsabhängigen Abweichungen beispielsweise an einer ersten Position 12 des Werkstücks 3 stärker bemerkbar als an einer anderen zweiten Position 13 des Werkstücks 3. Die vorbeschriebenen Verfahrensschritte werden in der Regel zeitlich aufeinander folgend durchgeführt, d.h. beispielweise zunächst an der ersten Position 12 des Werkstücks 3 und anschließend an den weiteren Positionen des Werkstücks 3.

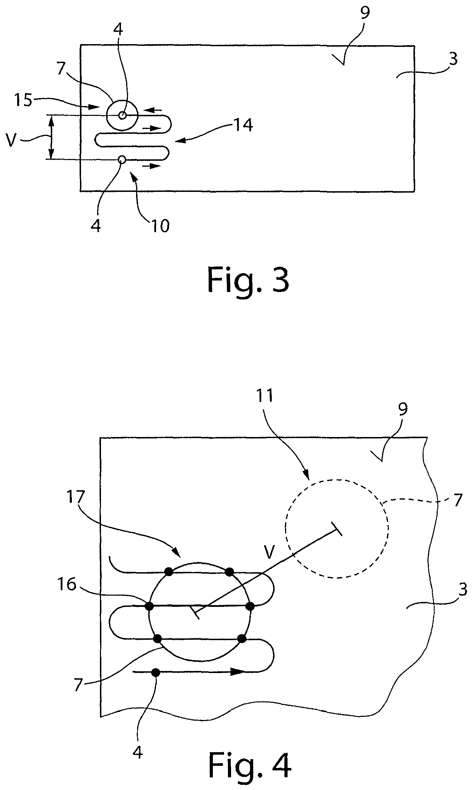

In **Fig. 3** ist das Werkstück 3 mit darin eingebrachter Durchtrittsöffnung 7 in einer Draufsicht dargestellt. Für den Fall, dass nach einer Durchführung des vorbeschriebenen Verfahrens eine von seiner Soll-Lage abweichende Ist-Lage des Laserbearbeitungskopfes 2 festgestellt wird, kann in einem weiteren Verfahrensschritt eine Kalibrierung des Laserbearbeitungskopfs 2 durchgeführt werden. Dazu wird der Laserbearbeitungskopf 2 (in Fig. 3 lediglich anhand des Laserspots des Laserstrahls 4 angedeutet) aus der zweiten Bearbeitungslage 10, in der der Laserbearbeitungskopf 2 von der Soll-Lage abweicht, mit einstrahlendem Laserstrahl 4 solange entlang eines z.B. mäanderförmigen Bewegungsmusters **14** relativ zum Werkstück 3 bewegt wird, bis in einer dritten Bearbeitungslage **15** des Laserbearbeitungskopfs 2 mit den Koordinaten (x₃, y₃, z₃, b₃, c₃) keine durch eine Wechselwirkung zwischen dem Laserstrahl 4 und dem Werkstück 3 erzeugte Strahlung detektiert wird. Aus dem Versatz V zwischen der zweiten und der dritten Bearbeitungslage 10, 15 wird dann eine Abweichung der Ist-Lage des Laserbearbeitungskopfes 2 von seiner Soll-Lage ermittelt werden, die zur Kalibrierung der Koordinaten des Laserbearbeitungskopfes 2 genutzt werden kann.

Durch das mäanderförmige Bewegungsmuster 14 kann die Werkstückoberfläche 9 zuverlässig abgesucht werden, bis die Durchtrittsöffnung 7 gefunden ist. Während des Bewegens des Laserbearbeitungskopfes 2 von der zweiten in die dritte Bearbeitungslage 10, 15 wird der Laser des Laserbearbeitungskopfes 2 bevorzugt mit gepulster oder im Vergleich zur normalen Schneidbearbeitung verminderter Intensität betrieben oder ein anderer Laser mit entsprechend verminderter Intensität wird eingesetzt.

Für den Fall der ausgeschnittenen Durchtrittsöffnung 7 kann die Abweichung des Laserbearbeitungskopfes 2 auch mittels einer Randerkennung der Durchtrittsöffnung 7 ermittelt werden, wie im Folgenden mit Bezug auf **Fig. 4** beschrieben wird. Der Laserbearbeitungskopf 2 wird mit kontinuierlich oder gepulst einstrahlendem Laserstrahl 4 relativ zum Werkstück 3 bewegt, und dabei werden mittels der Übergänge von detektierter und nicht-detektierter Strahlung die Ist-Positionen von Randpunkten **16** der Durchtrittsöffnung 7 erfasst. In der Auswerteeinrichtung 6b wird dann mittels der Ist-Positionen der Randpunkte 16 die Ist-Position **17** der Durchtrittsöffnung 7 bestimmt und aus dem Versatz V zwischen der Ist- und der gestrichelt dargestellten Soll-Position **11** der Durchtrittsöffnung 7 eine Abweichung der Ist-Lage des Laserbearbeitungskopfes 2 von seiner Soll-Lage ermittelt. Alternativ oder zusätzlich kann auch die Ist-Kontur der Durchtrittsöffnung 7 bestimmt und aus dem Versatz V zwischen der Ist- und der Soll-Kontur der Durchtrittsöffnung 7 eine Abweichung der Ist-Lage des Laserbearbeitungskopfes 2 von seiner Soll-Lage ermittelt werden. Die ermittelte Abweichung kann zur Kalibrierung der Koordinaten des Laserbearbeitungskopfes 2 genutzt werden.

Für den Fall, dass bei der Randerkennung der Laserstrahl 4 mit voller Schneidleistung gepulst eingestrahlt wird, sollten sich die Soll-Positionen benachbarter Laserpulse des Laserstrahls 4 auf dem Werkstück 3 räumlich nicht überlappen, da anderenfalls der Werkstückrand mit jedem Laserpuls weiter abgetragen wird, ohne dass genug Licht zur Detektion der Wechselwirkung erzeugt wird. Auch sollte bei der Randerkennung der Laserstrahl 4 relativ zum Werkstück 3 derart bewegt werden, dass sich die Soll-Positionen der Laserpulse des Laserstrahls 4 der Soll-Kontur der Durchtrittsöffnung 7 nicht rechtwinklig, sondern unter einem flachen Winkel nähern, damit die Laserpulse nicht auf ein vom vorherigen Laserpuls bereits bearbeitetes Werkstückmaterial treffen.

## Patentansprüche

1. Verfahren zum Feststellen, ob eine Ist-Lage eines entlang mehrerer Bewegungsachsen (X, Y, Z, B, C) beweglich gelagerten Laserbearbeitungskopfes (2) einer Laserbearbeitungsmaschine (1) einer Soll-Lage des Laserbearbeitungskopfes (2) entspricht oder davon abweicht,
**gekennzeichnet durch** folgende Verfahrensschritte:
a) Auswählen von mindestens zwei unterschiedlichen Bearbeitungslagen (x₁ y₁, z₁, b₁, c₁; x₂, y₂, z₂, b₂, c₂) des Laserbearbeitungskopfes (2), in denen der vom Laserbearbeitungskopf (2) ausgesandte Laserstrahl (4) auf die gleiche Soll-Position eines an der Laserbearbeitungsmaschine (1) festgelegten Werkstücks (3) gerichtet ist;
b) Bewegen des Laserbearbeitungskopfes (2) in die eine ausgewählte, erste Bearbeitungslage (x₁ y₁, z₁, b₁, c₁) und Einbringen einer Durchtrittsöffnung (7) an der Soll-Position oder um die Soll-Position des Werkstücks (3) herum mittels des Laserstrahls (4) in das Werkstück (3); und
c) Bewegen des Laserbearbeitungskopfes (2) in die andere ausgewählte, zweite Bearbeitungslage (x₂, y₂, z₂, b₂, c₂) und Detektieren von Strahlung, die durch eine Wechselwirkung zwischen dem Laserstrahl (4) und dem Werkstück (3) erzeugt wird, wobei die Ist-Lage des Laserbearbeitungskopfes (2) von seiner Soll-Lage um weniger als einen von der Abmessung der Durchtrittsöffnung (7) und von den beiden Bearbeitungslagen des Laserbearbeitungskopfes (2) abhängigen Betrag abweicht, wenn keine Strahlung detektiert wird, oder um mehr als diesen Betrag abweicht, wenn Strahlung detektiert wird.

2. Verfahren nach Anspruch 1, **dadurch gekennzeichnet, dass** der Laserbearbeitungskopf (2) in Schritt c) entlang mindestens einer beim Einbringen der Durchtrittsöffnung (7) nicht genutzten Bewegungsachse bewegt wird.

3. Verfahren nach Anspruch 1 oder 2, **dadurch gekennzeichnet, dass** der Durchmesser (D) der Durchtrittsöffnung (7) dem Laserstrahldurchmesser entspricht.

4. Verfahren nach Anspruch 1 oder 2, **dadurch gekennzeichnet, dass** die Abmessungen der Durchtrittsöffnung (7) größer als der Laserstrahldurchmesser sind.

5. Verfahren nach einem der vorhergehenden Ansprüche, **dadurch gekennzeichnet, dass** für den Fall, dass in Schritt c) Strahlung detektiert wird, der Laserbearbeitungskopf (2) mit kontinuierlich oder gepulst einstrahlendem Laserstrahl (4) aus der zweiten Bearbeitungslage (x₂, y₂, z₂, b₂, c₂) solange relativ zum Werkstück (3) bewegt wird, bis in einer dritten Bearbeitungslage (x₃, y₃, z₃, b₃, c₃) des Laserbearbeitungskopfs (2) keine Strahlung mehr detektiert wird.

6. Verfahren nach Anspruch 5, **dadurch gekennzeichnet, dass** aus dem Versatz (V) zwischen der zweiten und der dritten Bearbeitungslage eine Abweichung der Ist-Lage des Laserbearbeitungskopfes (2) von seiner Soll-Lage ermittelt wird.

7. Verfahren nach Anspruch 5, **dadurch gekennzeichnet, dass** der Laserbearbeitungskopf (2) mit kontinuierlich oder gepulst einstrahlendem Laserstrahl (4) aus seiner dritten Bearbeitungslage relativ zum Werkstück (3) bewegt wird und dabei mittels der Übergänge zwischen detektierter und nicht-detektierter Strahlung die Ist-Positionen von Randpunkten (16) der Durchtrittsöffnung (7) erfasst werden, dass mittels der Ist-Positionen der Randpunkte (16) die Ist-Position und/oder die Ist-Kontur der Durchtrittsöffnung (7) bestimmt wird und dass aus dem Versatz (V) zwischen der Ist- und der Soll-Position der Durchtrittsöffnung (7) und/oder aus der Abweichung zwischen der Ist- und der Soll-Kontur der Durchtrittsöffnung (7) eine Abweichung der Ist-Lage des Laserbearbeitungskopfes (2) von seiner Soll-Lage ermittelt wird.

8. Verfahren nach einem der Ansprüche 1 bis 4, **dadurch gekennzeichnet, dass** für den Fall, dass in Schritt c) keine Strahlung detektiert wird, der Laserbearbeitungskopf (2) mit kontinuierlich oder gepulst einstrahlendem Laserstrahl (4) relativ zum Werkstück (3) bewegt wird und dabei mittels der Übergänge von detektierter und nicht-detektierter Strahlung die Ist-Positionen von Randpunkten (16) der Durchtrittsöffnung (7) erfasst werden, dass mittels der Ist-Positionen der Randpunkte (16) die Ist-Position und/oder die Ist-Kontur der Durchtrittsöffnung (7) bestimmt wird und dass aus dem Versatz (V) zwischen der Ist- und der Soll-Position der Durchtrittsöffnung (7) und/oder aus der Abweichung zwischen der Ist- und der Soll-Kontur der Durchtrittsöffnung (7) eine Abweichung der Ist-Lage des Laserbearbeitungskopfes (2) von seiner Soll-Lage ermittelt wird.

9. Verfahren nach einem der Ansprüche 5 bis 8, **dadurch gekennzeichnet, dass** für den Fall, dass der Laserstrahl (4) gepulst eingestrahlt wird, die Soll-Positionen der einzelnen, eingestrahlten Pulse des gepulst einstrahlenden Laserstrahls (4) sich auf dem Werkstück (3) räumlich nicht überlappen.

10. Verfahren nach Anspruch 9, **dadurch gekennzeichnet, dass** der Laserstrahl (4) derart relativ zum Werkstück (3) bewegt wird, dass sich die Soll-Positionen der Pulse des gepulst einstrahlenden Laserstrahls der Kontur der Durchtrittsöffnung (7) nicht senkrecht nähern, insbesondere sich unter einem flachen Winkel nähern.

11. Verfahren nach einem der Ansprüche 5 oder 10, **dadurch gekennzeichnet, dass** der Laserstrahl (4) entlang eines vorbestimmten Bewegungsmusters (14), insbesondere eines mäanderförmigen Bewegungsmusters, relativ zum Werkstück (3) bewegt wird.

12. Verfahren nach einem der vorhergehenden Ansprüche, **dadurch gekennzeichnet, dass** in Schritt c) der Laserbearbeitungskopf (2) durch eine Drehung um 180° um eine Bewegungsachse (C) von der ersten in die zweite Bearbeitungslage bewegt wird.

13. Verfahren nach einem der vorhergehenden Ansprüche, **dadurch gekennzeichnet, dass** in Schritt b) der vom Laserbearbeitungskopf (2) zum Einbringen der Durchtrittsöffnung (7) ausgesandte Laserstrahl (4) im Wesentlichen rechtwinklig auf die Werkstückoberfläche (9) auftrifft.

14. Laserbearbeitungsmaschine (1) zur Durchführung des Verfahrens nach einem der Ansprüche 1 bis 13, mit einem beweglich gelagerten Laserbearbeitungskopf (2) zur Bearbeitung von Werkstücken (3) mittels eines Laserstrahls (4),
**gekennzeichnet durch** eine Steuereinrichtung (6a), die programmiert ist, den Laserbearbeitungskopf (2) in die erste Bearbeitungslage (x₁ y₁, z₁, b₁, c₁) zu bewegen und die Durchtrittsöffnung (7) an der Soll-Position oder um die Soll-Position des Werkstücks (3) herum mittels des Laserstrahls (4) in das Werkstück (3) einzubringen und anschließend den Laserbearbeitungskopf (2) in die zweite Bearbeitungslage (x₂, y₂, z₂, b₂, c₂) zu bewegen; einen Sensor (5) zum Detektieren von durch eine Wechselwirkung zwischen dem Laserstrahl (4) und dem Werkstück (3) erzeugter Strahlung, und eine Auswerteeinrichtung (6b), die programmiert ist, anhand der detektierten Strahlung zu prüfen, ob die Ist-Lage des Laserbearbeitungskopfs (2) seiner Soll-Lage entspricht oder davon abweicht.

15. Computerprogrammprodukt, welches Codemittel aufweist, die zum Durchführen aller Schritte des Verfahrens nach einem der Ansprüche 1 bis 13 angepasst sind, wenn das Programm auf einer Steuereinrichtung (6a) einer Laserbearbeitungsmaschine (1) nach Anspruch 14 abläuft.

## Claims

1. A method for determining whether an actual position of a laser machining head (2) of a laser machining machine (1) movably mounted along multiple axes of motion (X, Y, Z, B, C) corresponds to a desired position of the laser machining head (2) or deviates from it,
**characterized by** the following method steps:
a) selecting at least two different machining positions (x₁, y₁, z₁, b₁, c₁; x₂, y₂, z₂, b₂, c₂) of the laser machining head (2), in which the laser beam (4) emitted by the laser machining head (2) is directed onto the same desired position of a workpiece (3) fixed to the laser machining machine (1);
b) moving the laser machining head (2) into the one selected, first machining position (x₁ y₁, z₁, b₁, c₁) and introducing a through-opening (7) into the workpiece (3) at the desired position or around the desired position of the workpiece (3) by means of the laser beam (4); and
c) moving the laser machining head (2) into the other selected, second machining position (x₂, y₂, z₂, b₂, c₂) and detecting radiation which is generated by an interaction between the laser beam (4) and the workpiece (3), wherein the actual position of the laser machining head (2) deviates from its desired position by less than an amount that depends upon the dimension of the through-opening (7) and upon the two machining positions of the laser machining head (2), if no radiation is detected, or deviates by more than such amount, if radiation is detected.

2. The method according to claim 1, **characterised in that** the laser machining head (2) in step c) is moved along at least one axis of motion that is not used when introducing the through-opening (7).

3. The method according to claim 1 or 2, **characterised in that** the diameter (D) of the through-opening (7) corresponds to the laser beam diameter.

4. The method according to claim 1 or 2, **characterised in that** the dimensions of the through-opening (7) are greater than the laser beam diameter.

5. A method according to any of the preceding claims, **characterised in that**, in the event of radiation being detected in step c), the laser machining head (2) with a continuous or pulsed irradiating laser beam (4) is moved from the second machining position (x₂, y₂, z₂, b₂, c₂) relative to the workpiece (3), until, in a third machining position (x₃, y₃, z₃, b₃, c₃) of the laser machining head (2), no further radiation is detected.

6. The method according to claim 5, **characterised in that** from the offset (V) between the second and the third machining position, any deviation in the actual position of the laser machining head (2) from its desired position is determined.

7. The method according to claim 5, **characterised in that** the laser machining head (2) with a continuous or pulsed irradiating laser beam (4) is moved from its third machining position relative to the workpiece (3), and, thereby, the actual positions of boundary points (16) of the through-opening (7) are recorded by means of the transitions between detected and non-detected radiation, that the actual position and/or the actual contour of the through-opening (7) is determined by means of the actual positions of the boundary points (16), and that a deviation between the actual position of the laser machining head (2) and its desired position is determined based on the offset (V) between the actual and the desired position of the through-opening (7) and/or based on the deviation between the actual and the desired contour of the through-opening (7).

8. The method according to any of the claims 1 to 4, **characterised in that**, in the event of no radiation being detected in step c), the laser machining head (2) with a continuous or pulsed irradiated laser beam (4) is moved relative to the workpiece (3), and, thereby, the actual positions of boundary points (16) of the through-opening (7) are recorded by means of the transitions of detected and non-detected radiation, that the actual position and/or the actual contour of the through-opening (7) is determined by means of the actual positions of the boundary points (16), and that a deviation between the actual position of the laser machining head (2) and its desired position is determined based on the offset (V) between the actual and desired position of the through-opening (7) and/or based on the deviation between the actual and the desired contour of the through-opening (7).

9. The method according to any of claims 5 to 8, **characterised in that**, in the event of the laser beam (4) being irradiated pulsed, the desired positions of the individual, irradiated pulses of the laser beam (4) irradiated pulsed do not spatially overlap on the workpiece (3).

10. The method according to claim 9, **characterised in that** the laser beam (4) is moved relative to the workpiece (3), in such a way that the desired positions of the pulses of the laser beam irradiated pulsed do not approach the contour of the through-opening (7) perpendicularly, in particular approach at a shallow angle.

11. The method according to any of claims 5 or 10, **characterised in that** the laser beam (4) is moved along a predetermined movement pattern (14), in particular a meandering movement pattern, relative to the workpiece (3).

12. The method according to any of the preceding claims, **characterised in that**, in step c), the laser machining head (2) is moved from the first to the second machining position by rotating through 180° around an axis of motion (C).

13. The method according to any of the preceding claims, **characterised in that**, in step b), the laser beam (4) emitted by the laser machining head (2) to introduce the through-opening (7) hits the workpiece surface (9) substantially at right angles.

14. A laser machining machine (1) for carrying out the method according to any of claims 1 to 13, comprising a laser machining head (2) movably mounted for processing workpieces (3) using a laser beam (4), **characterized by** a control device (6a) that is programmed to move the laser machining head (2) into the first machining position (x₁ y₁, z₁, b₁, c₁) and introduce the through-opening (7) into the workpiece (3) at the desired position or around the desired position of the workpiece (3) by means of the laser beam (4), and subsequently move the laser machining head (2) into the second machining position (x₂, y₂, z₂, b₂, c₂),
a sensor (5) for detecting radiation generated by an interaction between the laser beam (4) and the workpiece (3), and
an evaluation device (6b) that is programmed to check whether the actual position of the laser machining head (2) corresponds to its desired position or deviates from it, based on the radiation detected.

15. A computer program product comprising coding that is adapted to carry out all the steps of the method according to any of the claims 1 to 13 once the program runs on a control device (6a) of a laser machining machine (1) according to claim 14.

## Revendications

1. Procédé pour déterminer si une position réelle d'une tête d'usinage au laser (2) d'une machine d'usinage au laser (1) montée mobile le long d'une pluralité d'axes de déplacement (X, Y, Z, B, C) correspond à une position de consigne de la tête d'usinage au laser (2) ou s'en écarte,
**caractérisé par** les étapes suivantes consistant à :
a) sélectionner au moins deux positions d'usinage différentes (x₁, y₁, z₁, b₁, c₁; x₂, y₂, z₂, b₂, c₂) de la tête d'usinage au laser (2) dans lesquelles le faisceau laser (4) émis par la tête d'usinage au laser (2) est dirigé sur la même position de consigne d'une pièce (3) fixée sur la machine d'usinage au laser (1) ;
b) déplacer la tête d'usinage au laser (2) dans la première position d'usinage sélectionnée (x₁, y₁, z₁, b₁, c₁) et pratiquer une ouverture de passage (7) à la position de consigne ou autour de la position de consigne de la pièce (3) dans la pièce (3) au moyen du faisceau laser (4) ; et
c) déplacer la tête d'usinage au laser (2) dans l'autre ou deuxième position d'usinage sélectionnée (x₂, y₂, z₂, b₂, c₂) et détecter un rayonnement produit par une interaction entre le faisceau laser (4) et la pièce (3), la position réelle de la tête d'usinage au laser (2) s'écartant de sa position de consigne de moins d'une valeur dépendant de la dimension de l'ouverture de passage (7) et des deux positions d'usinage de la tête d'usinage au laser (2) lorsqu'aucun rayonnement n'est détecté, ou s'en écartant de plus de cette valeur lorsqu'un rayonnement est détecté.

2. Procédé selon la revendication 1, **caractérisé en ce qu'**à l'étape c), la tête d'usinage au laser (2) est déplacée le long d'au moins un axe de déplacement non utilisé lorsque l'ouverture de passage (7) est pratiquée.

3. Procédé selon la revendication 1 ou 2, **caractérisé en ce que** le diamètre (D) de l'ouverture de passage (7) correspond au diamètre du faisceau laser.

4. Procédé selon la revendication 1 ou 2, **caractérisé en ce que** les dimensions de l'ouverture de passage (7) sont supérieures au diamètre du faisceau laser.

5. Procédé selon l'une des revendications précédentes, **caractérisé en ce que**, dans le cas où un rayonnement est détecté à l'étape c), la tête d'usinage au laser (2) est déplacée par rapport à la pièce (3) à partir de la deuxième position d'usinage (x₂, y₂, z₂, b₂, c₂) avec un faisceau laser (4) rayonnant en continu ou par impulsions jusqu'à ce que, dans une troisième position d'usinage (x₃, y₃, z₃, b₃, c₃) de la tête d'usinage au laser (2), plus aucun rayonnement ne soit détecté.

6. Procédé selon la revendication 5, **caractérisé en ce qu'**un écart de la position réelle de la tête d'usinage au laser (2) par rapport à sa position de consigne est déterminé à partir du décalage (V) entre la deuxième et la troisième position d'usinage.

7. Procédé selon la revendication 5, **caractérisé en ce que** la tête d'usinage au laser (2) est déplacée par rapport à la pièce (3) à partir de sa troisième position d'usinage avec un faisceau laser (4) rayonnant en continu ou par impulsions, et les positions réelles de points de bord (16) de l'ouverture de passage (7) sont détectées au moyen des transitions entre rayonnement détecté et non détecté, **en ce que** la position réelle et/ou le contour réel de l'ouverture de passage (7) est déterminé(e) au moyen des positions réelles des points de bord (16) et **en ce qu'**un écart de la position réelle de la tête d'usinage au laser (2) par rapport à sa position de consigne est déterminé à partir du décalage (V) entre la position réelle et la position de consigne de l'ouverture de passage (7) et/ou à partir de l'écart entre le contour réel et le contour de consigne de l'ouverture de passage (7).

8. Procédé selon l'une des revendications 1 à 4, **caractérisé en ce que**, dans le cas où aucun rayonnement n'est détecté à l'étape c), la tête d'usinage au laser (2) est déplacée par rapport à la pièce (3) avec un faisceau laser (4) rayonnant en continu ou par impulsions, et les positions réelles de points de bord (16) de l'ouverture de passage (7) sont détectées au moyen des transitions entre rayonnement détecté et non détecté, **en ce que** la position réelle et/ou le contour réel de l'ouverture de passage (7) est déterminé(e) au moyen des positions réelles des points de bord (16) et **en ce qu'**un écart de la position réelle de la tête d'usinage au laser (2) par rapport à sa position de consigne est déterminé à partir du décalage (V) entre la position réelle et la position de consigne de l'ouverture de passage (7) et/ou à partir de l'écart entre le contour réel et le contour de consigne de l'ouverture de passage (7).

9. Procédé selon l'une des revendications 5 à 8, **caractérisé en ce que**, dans le cas où le faisceau laser (4) rayonne par impulsions, les positions de consigne des impulsions individuelles rayonnées du faisceau laser (4) rayonnant par impulsions ne se chevauchent pas spatialement sur la pièce (3).

10. Procédé selon la revendication 9, **caractérisé en ce que** le faisceau laser (4) est déplacé par rapport à la pièce (3) de telle sorte que les positions de consigne des impulsions du faisceau laser rayonnant par impulsions ne s'approchent pas perpendiculairement du contour de l'ouverture de passage (7), en particulier s'en approchent selon un angle plat.

11. Procédé selon l'une des revendications 5 ou 10, **caractérisé en ce que** le faisceau laser (4) est déplacé par rapport à la pièce à usiner (3) suivant un motif de déplacement prédéterminé (14), en particulier un motif de déplacement en forme de méandre.

12. Procédé selon l'une des revendications précédentes, **caractérisé en ce qu'**à l'étape c), la tête d'usinage au laser (2) est déplacée de la première à la deuxième position d'usinage par une rotation de 180° autour d'un axe de déplacement (C).

13. Procédé selon l'une des revendications précédentes, **caractérisé en ce qu'**à l'étape b), le faisceau laser (4) émis par la tête d'usinage au laser (2) pour pratiquer l'ouverture de passage (7) atteint la surface de pièce (9) sensiblement à angle droit.

14. Machine d'usinage au laser (1) pour mettre en oeuvre le procédé selon l'une des revendications 1 à 13, comportant une tête d'usinage au laser (2) montée mobile pour l'usinage de pièces (3) au moyen d'un faisceau laser (4),
**caractérisée par** un dispositif de commande (6a) qui est programmé pour déplacer la tête d'usinage au laser (2) dans la première position d'usinage (x₁, y₁, z₁, b₁, c₁) et pour pratiquer l'ouverture de passage (7) dans la pièce (3) à la position de consigne ou autour de la position de consigne de la pièce (3) au moyen du faisceau laser (4) et pour déplacer ensuite la tête d'usinage au laser (2) dans la deuxième position d'usinage (x₂, y₂, z₂, b₂, c₂);
un capteur (5) pour détecter un rayonnement produit par une interaction entre le faisceau laser (4) et la pièce (3), et
un dispositif d'évaluation (6b) qui est programmé pour vérifier, à l'aide du rayonnement détecté, si la position réelle de la tête d'usinage au laser (2) correspond à sa position de consigne ou s'en écarte.

15. Produit programme d'ordinateur qui présente des moyens de codage adaptés à mettre en oeuvre toutes les étapes du procédé selon l'une des revendications 1 à 13 lorsque le programme s'exécute sur un dispositif de commande (6a) d'une machine d'usinage au laser (1) selon la revendication 14.
